# EUROPEAN PATENT APPLICATION

(11) **EP 2 218 502 A2**
(43) Date of publication of application: **18.08.2010**
(21) Application number: 09011715.1
(22) Date of filing: 28.09.2000
(51) Int. Cl.: B01J 27/14, C10G 45/60, B01J 37/18

(54) **Transition metal phosphide catalysts**

(30) Priority: 30.09.1999 US 156701
(62) Divisional of application: 00966987.0
(71) Applicant: IFP, 92852 Rueil-Malmaison Cédex (FR)
(72) Inventor: Oyama, Shigeo, T., Blacksburg VA 24060 (US)
(74) Representative: Kröncke, Rolf

(57) **Abstract**

There is provided a transition metal phosphide catalyst that is active for hydrotreating hydrocarbon feedstocks. The catalyst comprises a transition metal phosphide complex supported on a high surface area support. The high surface area support may be selected from the group consisting of carbon, silica, alumina, titania, thoria, magnesia, zirconia, kaolin, bentonite, kieselguhr, zeolites and combination thereof. The transition metal phosphide complex may include a mixed metal phosphide complex. The catalyst comprises a metal phosphide complex having the formula MPₓ, where M is selected from the group consisting of V, Cr, Mn, Fe, Co, Ni, Nb, Mo, Ta, and W, and where x is between about 0.1 and about 10; and an oxide support, where the metal phosphide complex is dispersed on the high surface area support. Further, the catalyst comprises a metal phosphide catalyst comprising a metal phosphide complex having the formula AₐB_{b}P_{y}, where A and B are each selected from the group consisting of V, Cr, Mn, Fe, Co, Ni, Nb, Mo, Ta, and W, where the sum of a and b is 1, the ratio of a to b is between about 0.01 and about 100, and y is between about 0.1 and about 10; and an oxide support, where the metal phosphide complex is dispersed on the high surface area support. Further, there is provided a method for hydrotreating a hydrocarbon feed using a transition metal phosphide catalyst. A method for hydrodesulfurization, including deep hydrodesulfurization, using the above catalysts is also described.

## Description

This application is based on U.S. Provisional Application No. 60/156,701 filed September 30, 1999 herein incorporated by reference in its entirety.

### Background of the Invention

### Field of the Invention

This invention pertains to a catalyst composition and a method for hydrotreating hydrocarbon feedstocks, and more particularly to hydrodesulfurization (HDS), hydrodenitrogenafion (HDN) and hydrogenation (HYD).

### Background Description

Phosphorus has been used in combination with transition metals on supports for use in hydrotreating hydrocarbon feedstocks, In these cases, the phosphorus is in the form of an oxide (phosphate) usually incorporated as an additive. From the literature it is understood that the phosphorus can have multiple roles. For example, it can stabilize the surface area of the support, prevent the formation of compounds such as cobalt or nickel aluminate, alter acid-base properties, or aid in the dispersion of the metals in the catalyst.

Several references have utilized phosphorus as an oxide, component. For example, U.S. Patent Number 4,600,703 describes a catalyst composed of Mo, Ni, and phosphorus oxide deposited on an alumina support and calcined at 450-650 °C. U.S. Patent Number 4,520,128 describes a catalyst composed of a group 6 metal, a group 8 metal, and phosphorus oxide on an alumina support and calcined at 400-600 °C. U.S. Patent Number 4,687,568 describes a catalyst consisting ofNi sulfide supported on a Zr compound to which is added a compound containing P and O. U.S. Patent Number 4,707,246 describes a catalyst containing either Mo, zinc titanate, either Ni or Co supported on alumina to which is added a compound containing P and O. In U.S. Patent Number 4,392,985 to a catalyst composed of Mo promoted with Co is added P in the form of orthophosphoric acid, and then calcined at a temperature of at least 750 °F (400 °C). In U.S. Patent Number 4,388,222 to a catalyst composed of Mo promoted with Ni or Co is added P in the form of phosphoric acid, and is then calcined. In U.S. Patent Number 4,632,914 Mo, W, Co and Ni are supported on bauxite and to this is added orthophosphoric acid followed by calcination between 300-600 °C. U.S. Patent Number 4,588,706 and U.S. Patent Number 4,689,314 describe a catalyst constituted of a group 6 metal, a group 8 metal and P in the form of phosphoric acid which is calcined at 400-550 °C. WO 9,708,273A1, U.S. Patent Number 4,941,964, and U.S. Patent Number 5,322,616 describe a catalyst comprising an alumina support, a group 8 metal oxide, a group 6 metal oxide, and phosphorus oxide, In U.S. Patent Number 4,743,574 the phosphorus is added to the alumina support to form an aluminum phosphate, and on this are added Co and Mo oxides. U.S. Patent Number 3,755,148, U.S. Patent Number 3,755,150, and U.S. Patent Number 3,755,196 describe supported catalysts containing Mo, Ni or Co with P added as orthophosphoric acid,

Several references describe catalyst preparation conditions where the phosphorus is transformed to an oxide. For example, in U.S. Patent Number 4,446,248 a catalyst containing Mo, Ni, and P on alumina is calcined between 975-1025 °F (525 -550 °C). In U.S. Patent Number 4,003,828 a catalyst containing Mo or W and Co or Ni is prepared on a support obtained by cogellation of alumina and phosphorus oxide, U.S. Patent Number 5,021,385 describes a catalyst prepared by adding Mo and Ni and optionally P to a hydrogel of Ti and Zr and calcining between 325-450 °C, U.S. Patent Number 4,716,141 and U.S. Patent Number 4,738,945 describe a catalyst prepared by adding Ni and either Mo or W with P to an alumina obtained by precipitation and calcining between 300-900 °C. U.S. Patent Number 4,717,705 describes a catalyst prepared by adding Co and either Mo or W with P to an alumina obtained by precipitation and calcining between 300-900 °C. After the calcination step the metals are converted to sulfides by a separate sulfidation step for example at 250-330 °C as described in U.S. Patent Number 4,689,314 or by exposure to a feed containing sulfur. In no case are phosphides formed at the conditions of preparation,

In the cases described above, the phosphorous component in standard catalysts is found in oxidized form, essentially a phosphate compound. This oxidation occurs as a result of calcination (high temperature treatment in air or oxygen). The presence of phosphate in the standard catalysts is well established by nuclear magnetic resonance (NMR) and x-ray photoelectron spectroscopy (XPS) studies. One example, is U.S. Patent Number 5,462,651 which reports the NMR chemical shift for phosphate as occuring between -5 and -30 ppm. In phosphides the NMR chemical shift occurs between +30 and +300 ppm.

### Summary of the Invention

The present invention is directed to a catalyst where the phosphorous component is in reduced form, in the form of a phosphide highly dispersed on a high surface area support. The formation of the phosphide on the support is a result of high temperature reduction during preparation of the catalyst. Catalysts prepared in accordance with the present invention product a highly dispersed catalyst in which the surface area of the metal component is enhanced.

An object of this invention is to provide a transition metal phosphide catalyst highly dispersed on a high surface area support. Another object of the present invention is to provide a transition metal phosphide catalyst for hydrotreating hydrocarbon feedstocks. Further, an object of the present invention is to provide a catalyst material that that is easy to prepare through the reduction of phosphate, and that is easy to regenerate through reduction or by oxidation followed by reduction.

The present invention includes a catalyst comprising a metal phosphide complex having the formula MPₖ, where M is selected from the group consisting of V, Cr, Mn, Fe, . Co, Ni, Nb, Mo, Ta, and W, and where x ranges from about 0,1 to about 10; and a high surface area support, where the metal phosphide complex is dispersed on the high surface area support. Further, in a preferred embodiment, x may range from about 0.5 and about 3.

The high Surface area support may be selected from the group consisting of carbon, silica, alumina, titania, thoria, magnesia, zirconia, kaolin, bentonite, kieselguhr, zeolites, and combinations thereof, The metal phosphide complex may be supported on the high surface area support in the range from about 1 to about 40% by weight of complex to support and preferably in the range from about 10 to about 30°/ by weight of complex to support.

The invention further includes a metal phosphide catalyst comprising a metal phosphide complex having the formula AₐB_{b}P_{y}, where A and B are each selected from the group consisting of V, Cr, Mn, Fe, Co, Ni, Nb, Mo, Ta, and W, where the sum of a and b is 1, the ratio of a to b is between about 0.01 and about 100, and y is between about 0.1 and about 10. The ratio of a to b may range from about 0. 1 to about 10. Further, the ratio of a to b may preferably range from about 0.2 and 5. Further, y may preferably range from about 0.5 and about 3. The metal phosphide complex is dispersed on the high surface area support.

The present invention more generally includes a metal catalyst comprising at least one metal selected from the group consisting of V, Cr, Mn, Fe, Co, Ni, Nb, Mo, Ta, and W, wherein at least a portion of the one metal is in the form of a phosphide; and a high surface area support wherein the at least one metal and said phosphide are highly dispersed on said high surface area support.

The catalysts of the present invention may also include a promoter selected from the group consisting of the alkali metals, alkaline earth metals, platinum group metals, rhenium, copper, halides, boron, carbon, nitrogen, aluminum, sulfur, gallium, germanium, arsenic, tin, antimony, bismuth, selenium and tellurium.

Further, the invention includes a method for hydrotreating a hydrocarbon feed comprising the step of exposing the hydrocarbon feed to a catalyst in an atmosphere containing hydrogen, where the catalyst comprises at least one metal selected from the group consisting of V, Cr, Mn, Fe, Co, Ni, Nb, Mo, Ta, and W, wherein at least a portion of the one metal is in the form of a phosphide; and a high surface area support wherein the at least one metal and said phosphide are dispersed on said high surface area support. The phosphide may have the formula MPₓ, where M is selected from the group consisting of V, Cr, Mn, Fe, Co, Ni, Nb, Mo, Ta, and W, and where x ranges from about 0.1 and about 10. Further, x may preferably range from about 0.5 and about 3. The phosphide may have the formula AₐB_{b}P_{y}, where A and B are each selected from the group consisting of V, Cr, Mn, Fe, Co, Ni, Nb, Mo, Ta, and W, wherein the sum of a and b is 1, the ratio of a to b ranges from about 0.01 to about 100, and y ranges from about 0.1 and about 10. The ratio of a to b may preferably range from about 0.1 to about 10. Further, the ratio of a to *b may preferably range from about 0.2 to 5, and y may preferably range from about 0,5 to about 3.

The invention includes a method of hydrotreating a hydrocarbon feed where the step of exposing the hydrocarbon feed to a catalyst is sufficient to remove nitrogen from the hydrocarbon feed.

The invention includes a method of hydrotreating a hydrocarbon feed where the step of exposing the hydrocarbon feed to a catalyst is sufficient to remove oxygen from the hydrocarbon feed.

The invention includes a method of hydrotreating a hydrocarbon feed where the step of exposing the hydrocarbon feed to a catalyst is sufficient to hydrogenate an unsaturated organic compound in the hydrocarbon feed,

The invention includes a method of hydrotreating a hydrocarbon feed where the step of exposing the hydrocarbon feed to a catalyst is sufficient to hydroisomerize an organic compound in the hydrocarbon feed.

The method of the present invention may include a hydrocarbon feed selected from the group consisting of middle distillates, kero, naptha, gas oil obtained by catalytic cracking, gas oil obtained by thermal cracking, straight-run gas oil, coker gas oil, vacuum gas oils, heavy gas oils, coal liquids, feeds extracted from tar sands, and feeds extracted from shale.

Further, the method may include the step of processing the hydrocarbon feed in the presence of the catalyst at a temperature ranging from about 250 to about 450 °C, pressure ranging from about 5 to about 250 bar, space velocities ranging from about 0.1 to about 10 hr⁻¹, and H₂/feed ratios ranging from about 1000 to about 15000 scf/barrel.

Further, the invention includes a method for hydrodesulfurizing a hydrocarbon feed wherein the feed contains sulfur compounds that include sterically hindered, alkyl substituted heteroaromatic condensed rings, The hydrodesulfurization process consists of exposing the hydrocarbon feed to a catalyst, wherein the catalyst comprises at least one metal selected from the group consisting of V, Cr, Mn, Fe, Co, Ni, Nb, Mo, Ta, and W, wherein at least a portion of the one metal is in the form of a phosphide; and a high surface area support wherein the at least one metal and said phosphide are dispersed on said high surface area support. The phosphide may have the formula MPₖ, where M is selected from the group consisting of V, Cr, Mn, Fe, Co, Ni, Nb, Mo, Ta, and W, and where x ranges from about 0.1 and about 10. Further, x may preferably range from about 0.5 and about 3. The phosphide may have the formula AₐB_{b}P_{y}, where A and B are each selected from the group consisting of V, Cr, Mn, Fe, Co, Ni, Nb, Mo, Ta, and W, wherein the sum of a and b is 1, the ratio of a to b ranges from about 0.01 to about 100, and y ranges from about 0.1 and about 10. The ratio of a to b may preferably range from about 0.1 to about 10. Further, the ratio of a to b may preferably range from about 0.2 to 5, and y may preferably range from about 0.5 to about 3.

### Brief Description of the Drawings

Figure 1 shows X-ray diffraction patterns of fresh and spent 23 wt% MoP/Al₂O₃.
Figure 2 shows X-ray diffraction patterns of fresh and spent MoP/SiO₂.
Figure 3 shows X-ray diffraction patterns of fresh and spent WP/SiO₂.
Figure 4 shows X-ray diffraction patterns of fresh and spent 8,6 wt% Ni₂P/SiO₂.
Figure 5 shows X-ray diffraction patterns of fresh and spent CoP/SiO₂.
Figure 6 shows X-ray diffraction patterns of fresh and spent Fe₂P/SiO₂.
Figure 7 shows X-ray diffraction patterns of NiMoP₂.
Figure 8 shows the reactivity of phosphides in hydroprocessing.
Figure 9 shows the X-ray diffraction patterns of WP before and after reaction.
Figure 10 shows a comparison of conversion of 4,6-dimethyldibenzothiophene.

### Detail Description of the Invention

The present invention is directed to a catalyst composition and a method for hydrotreating hydrocarbon feedstocks, more particularly hydrodesulfurization (HDS), hydrodenitrogenation (HDN), hydrodeoxygenation, hydroisomerization, and hydrogenation (HYD). The invention further relates to processes for the preparation and use of a catalyst composition.

In general, hydrotreating refers to the removal of sulfur (HDS) and nitrogen (HDN) from hydrocarbon feedstocks. The removal of these components is important for producing clean burning fuels. In addition, it is essential to remove these elements since the catalysts used in subsequent processing, like cracking, hydrocracking, and reforming, are poisoned by the sulfur and nitrogen.

The present invention provides new types of catalysts for hydrotreating hydrocarbon feedstocks. The catalysts are supported transition metal phosphides, a class of material in which the phosphorus forms a chemical compound with the metal component. The metal source can be quite diverse and includes the ammonium salts, chlorides, nitrates, hydroxides, heteropoly compounds and other species, The transition metals that maybe used in the catalyst of the present invention includes, but is not limited to, Mo, W, Fe, Co, Ni, V, Nb, Cr, Mn, Ta, and other suitable transition metals. The catalyst may be prepared according to the formula MPₓ where M is a metal and x may range from about 0.1 to about 10. Preferably x ranges from about 0.5 to about 3.

The metals may be combined in various ratios to form multimetallic phosphides according to the formula AₐB_{b}P_{y} where A and B are metals and where the sum of a and b is 1, the ratio of a to b ranges from about 0,01 to about 100, and y ranges from about 0.1 to about 10. Preferably the ratio of a to b ranges from about 0.1 to about 10 and most preferably the ratio of a to b ranges from about 0.2 to 5. Further, y preferably ranges from about 0,5 to about 3. Mixed metal compositions can give rise to diverse substances with potentially very unique properties such as activity, or selectivity for the hydrotreating reactions. Some of the mixed metal composition includes MoₐCo_{b}P_{y}, MoₐNb_{b}P_{y}, WₐNi_{b}P_{y}, and the like. It will be evident to those skilled in the art that a wide variety of multimetallic phosphides can be prepared where the catalyst contains three or more metal elements.

The phosphorus source can be similarly diverse, and includes phosphoric acid, phosphorous acid, and the various ammonium hydrogen phosphates. The relative amounts of phosphorus (P) and metal (M) are given by molar percentages of 50 to 300 mol% which correspond to stoichiometries of MP_{0.5} to MP₃.

The catalysts are in supported form, where the active metal phosphide is present on the support as either small particles or as a surface phase. The metal phosphide may be present on the support as particles ranging from 1nm to about 10µm in size. Dispersing the metal phosphide on the high surface area support increases the surface area of the metal phosphide compared to the bulk form. The phosphides are deposited on a high surface area support in order to disperse and utilize the phosphide component more effectively. The metal phosphide is loaded on the support in the range from about 1 to about 40% by weight metal phosphide to support. Preferrably, the metal phosphide is loaded on the support in the range of about 10 to about 30% by weight metal phosphide to support. As used herein, "high surface area support" is a support preferably having a surface area opt least about 50 m²/g. Most preferably, the support has a surface area of at least about 100 m`Ig (BEST method) and a pore volume in the range of 0.25-1.3 cm³/g ' (mercury penetration method). The supports include, but are not limited to, substances like silica, alumina, titania, thoria, magnesia, zirconia, kaolin, bentonite, kieselguhr, zeolites, carbon, other high surface area supports, and combinations thereof. Preference is given to alumina or silica or combinations thereoF.

A preferred method of preparation for the catalysts involves the reduction of precursor phosphates in a stream of hydrogen. One suitable method of preparing the catalyst is impregnating the supports with solutions of the metal and phosphorus components, and optionally drying at 25-200 °C and calcining in air or oxygen in the range of 350-750 °C so as to intimately mix the components. The resulting material is then reduced in a hydrogen stream at temperatures between 300 °C and 1000 °C, preferably 400-700 °C. , Following reduction the catalyst- can be used as such by exposure to the desired feed, If the catalyst needs to be transported to another site it can be passivated in a stream of oxygen in an inert gas which can start at low concentrations (0.1%) and gradually go up (2 1 %). The catalyst treated in this manner can undergo re- ' reduction in hydrogen at temperatures from 300-700 °C, or be activated by direct contact with the feed. The catalyst is typically formed as spheres or extrudates, which include symmetrical and asymmetrical polylobed particles.

It will be clear to those skilled in the art that there can be a wide number of variations on this method. It should be possible to apply a plurality of impregnating steps, the impregnating solutions containing one or more of the component precursors, or a portion thereof. Instead of impregnating techniques other methods like dipping methods, or spraying methods can be used to deposit the active components on the support. Similarly, there can be a multitude of variations on the mode and order of drying, calcining, and shaping of the catalyst,

It should also be clear to those skilled in the art that there can be a large number of promoters added to the catalysts to enhance their activity, selectivity or stability. These include, but are not limited to, the alkali metals, alkaline earth metals, platinum group metals, rhenium, copper, halides, as well as main group elements like boron, carbon, nitrogen, aluminum, sulfur, gallium germanium, arsenic, tin, antimony, bismuth, selenium and tellurium.

The catalysts of the present invention have high activity for hydrodesulfurization and hydrodenitrogenation of hydrocarbon feedstocks. The activity, based on an equivalent surface area, is higher than that of a commercial catalyst studied at the same conditions. The conditions are typical of industrial processes and involve high temperature and pressure. The catalyst of the present invention show high stability with no deactivation over a hundred hours of reaction time.

The present catalysts can be used in the hydrotreating of a wide variety of feeds. These include, but are not limited to middle distillates, kero, naptha, gas oil obtained by catalytic cracking, gas oil obtained by thermal cracking, straight-run gas oil, coker gas oil, vacuum gas oils, heavy gas oils, coal liquids, and feeds extracted from tar sands or shale. The conventional process conditions are temperatures in the range of 250-450 °C, pressures in the range of 5-250 bar, space velocities in the range of 0.1-10 hr⁻¹, and H₂/oil ratios in the range of 1000- 15000 scf/barrel.

Various aspects of the present invention are illustrated in the following examples, The examples are provided for illustration purposes and should not be construed as limiting the scope of the present invention.

### Example 1

### Preparation and characterization of MoP/Al₂O₃

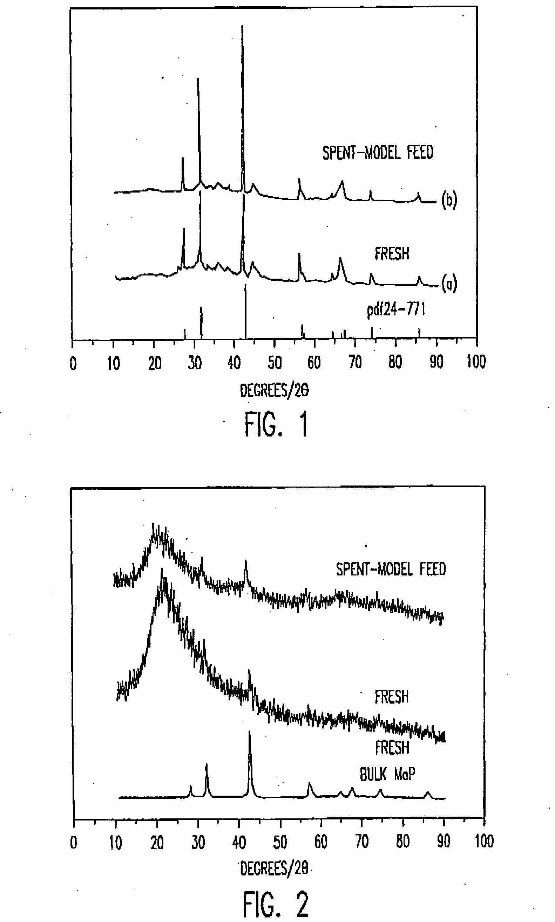

Ammonium paramolybdate (Aldrich, 95%) and ammonium phosphate (Aldrich, 99%) were dissolved in distilled water and the solution was used to impregnate a γ-Al₂O₃ support (Degussa, Aluminoxid C) to the point of incipient wetness. The moist paste was calcined in air at 773 K for 6 hours, ground with a mortar and pestle, pressed to 4000 psi, broken, and sieved to particles between 650 and 1180 µm for use, The pelletized precursors were placed in quartz u-tube reactors, and heated with linear temperature ramps (heating rate = 5 K min⁻¹) in flowing hydrogen (Airco, 99.999%) to reduce the metal phosphate to metal phosphide. The hydrogen flow was set at 975 cm³ min⁻¹ per gram of precursor loaded and the final temperature was 850 °C. After reduction the product was cooled to room temperature under helium and passivated progressively with 0.1% O₂/He and then 0.5% O₂/He, then exposed to air in the sample tube for 24 hours. The samples were characterized by CO uptake measurements after reduction in hydrogen for 2 hours at 350 °C. The physical characteristics are shown in Table I. X-ray diffraction spectra were collected using a Scintag XDS-2000 diffractometer. The physical properties and x-ray diffraction pattern of the material are shown in Figure 1. Comparison of the XRD patterns of the supported catalysts to a bulk MoP. reference from the powder diffraction files (pdf 24-771) shows the presence of supported MoP.

**Table I. Physical characteristics of MoP/Al₂O₃ catalysts**

| Sample^{†} | Physical Characteristics | |
|---|---|---|
| | Surface Area m² g⁻¹ | CO Uptake µmol g⁻¹ |
| Al₂O₃ blank | 90.6 | - |
| 6.8 wt% | 74.8 | 20.0 |
| 12.8 wt% | 71.4 | 30.6 |
| 12.8 wt%* | 73.7 | 29.4 |
| 22.7 wt% | 59.6 | 28.8 |
| 38.9 wt% | 48.8 | 26.3 |

| | | |
|---|---|---|
| † Reduced to 850 °C (β = 5 K min⁻¹, s.v. =1000 sccm g⁻¹) for 2 hours * Reduced to 750 °C (β = 5 K min⁻¹, s.v. = 1000 sccm g⁻¹) for 2 hours | | |

### Example 2

### Preparation and characterization of MoP/SiO₂

The catalyst was prepared in the same manner as in example 1, except that the support used was SiO₂ (Cabosil L90). The physical properties are listed in Table II and the x-ray diffraction patterns of the material are shown in Figure 2, The XRD patterns of the supported catalysts show a large broad feature at 20°, but otherwise the pattern corresponds to that of MoP as shown by the reference.

**Table II. Physical characteristics of MoP/SiO₂ catalyst**

| Sample | Physical Characteristics | |
|---|---|---|
| | Surface Area m² g⁻¹ | CO Uptake µmol g⁻¹ |
| SiO₂ blank | 91 | **-** |
| MoP/SiO₂ | 50 | 50 |

### Example 3

### Preparation and characterization of WP/SiO₃

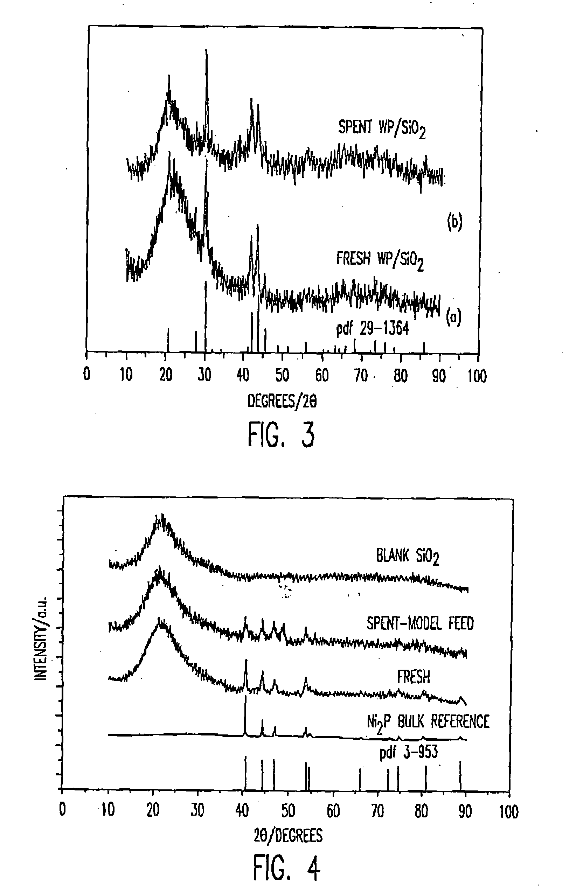

The catalyst was prepared in the same manner as in example 1, except that the precursor used was ammonium paratungstate (Aldrich, 95%), and the support used was SiO₂ (Cabosil L90). The physical properties are shown in Table III below and the x-ray diffraction pattern of the material is shown in Figure 3. The XRD pattern of the supported catalysts show a large broad feature at 20 °, but otherwise the pattern corresponds to that of WP as shown by the reference spectrum from the powder diffraction files (pdf 29-1364).

**Table III. Physical characteristics of WP/SiO₂ catalysts**

| Samples | Physical Characteristics | |
|---|---|---|
| | Surface Area m² g⁻¹ | CO Uptake µmol g⁻¹ |
| SiO₂ blank | 91 | - |
| 6.8 wt% WP/SiO₂ | 62 | 19 |

In situ phosphorus 31 solid-state NMR confirms that a highly dispersed phase WP is formed on an inert SiO₂ support, with the same signal (chemical shift of 252 ppm, and high anisotropy) as a bulk sample. This indicates that the supported samples have the same structure as the bulk, but a substantially higher surface area.

### Example 4

### Preparation and characterization of Ni₂P/SiO₂

To a solution of ammonium phosphate (Aldrich, 99%) in distilled water was added nickel nitrate (Aesar, 19.8% Ni). An excess of phosphorus was used, so that molar ratios of Ni:P of 1:1 and 1:2 were used, corresponding to weight percents of 9.4 and 12.2%. A precipitate formed which was dissolved by the addition of a few drops of nitric acid (Fisher, 69.4% assay). Water was added to form enough solution to carryout an incipient wetness impregnation of a silica (Cabosil L90) support. The solid was dried at 120 °C for 3 hours and calcined at 500°C, for 6 hours. It was reduced in a temperature ' programmed manner with a heating rate of 1 K min⁻¹ to 577 °C. The physical properties are listed in Table IV below and the x-ray diffraction pattern of the material is shown in Figure 4.

**Table IV. Physical characteristics of Ni₂P/SiO₂ catalysts**

| Sample | Physical Characteristics | |
|---|---|---|
| | Surface Area m² g⁻¹ | CO Uptake µmol g⁻¹ |
| 9.4 wt% Ni₂P/SiO₂ † | 118 | 15 |
| 12,2 wt% Ni₂P/SiO₂ * | 132 | 29 |

| | | |
|---|---|---|
| † Ni:P = 1:1 * Ni:P =1:2 | | |

### Example 5

### Preparation and characterization of CoP/SiO₂

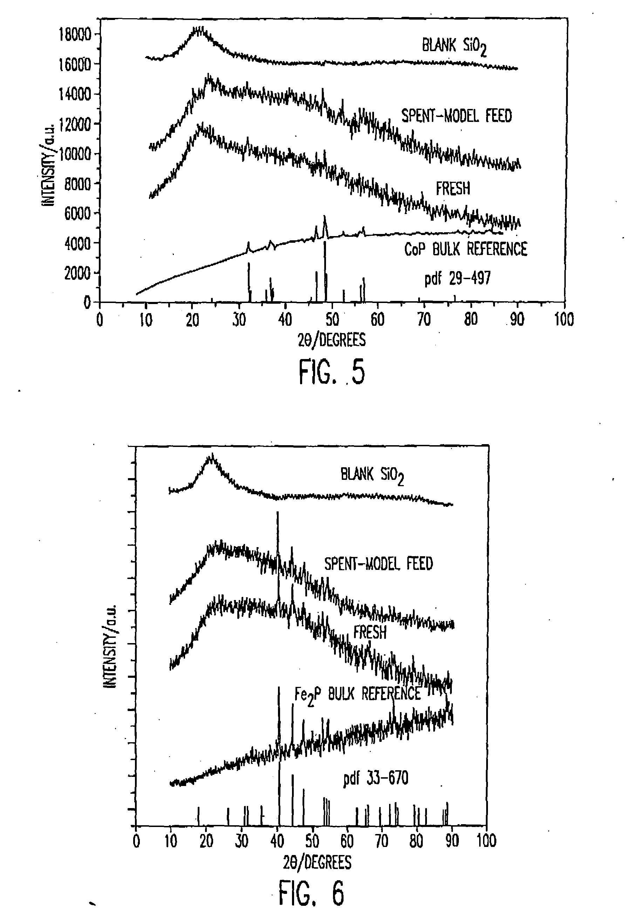

The catalyst was prepared in the same manner as in example 4, except that the precursor was cobalt nitrate (Aldrich, 99%) and no nitric acid was needed to form a solution. Equimolar quantities of Co and P were used. The final temperature reduction was 690 °C. The physical properties are listed in Table V below and the x-ray diffraction pattern of the material is shown in Figure 5.

**Table V. Physical characteristics of CoP/SiO₂ catalysts**

| Sample | Physical Characteristics | |
|---|---|---|
| | Surface Area m² g⁻¹ | CO Uptake µmol g⁻¹ |
| CoP/SiO₂ | 134 | 16 |

### Example 6

### Preparation and characterization of Fe₂P/SiO₂

The catalyst was prepared in the same manner as in example 4, except that the precursor was iron nitrate (Aldrich, 99.9%) and no nitric acid was needed to form a solution. Equimolar quantities of Fe and P were used. The final temperature of reduction was 730 °C. The physical properties are listed in Table VI below and the x-ray diffraction pattern of the material is shown in Figure 6.

**Table VI. Physical characteristics of Fe₂P/SiO₂ catalysts**

| Sample | Physical Characteristics | |
|---|---|---|
| | Surface Area m² g⁻¹ | CO Uptake µmol g⁻¹ |
| Fe₂P/SiO₂ | 153 | . 16 |

### Example 7

### Preparation and characterization of NiMoP₂/SiO₂

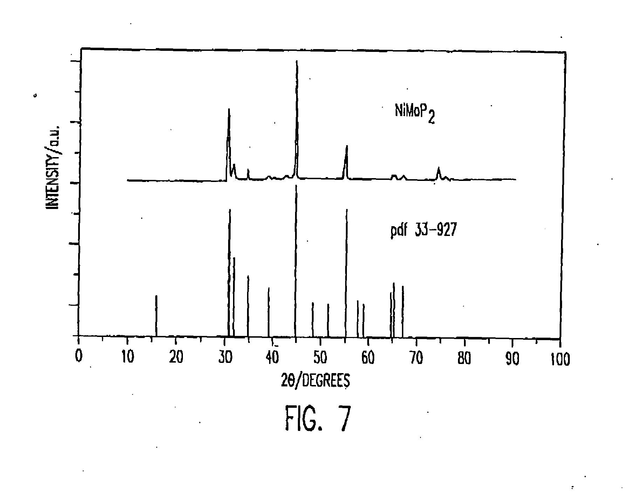

A solution of ammonium paramolybdate (Aldrich, 95%) and ammonium phosphate (Aldrich, 99%) in distilled water was prepared. To this solution was added nickel nitrate (Aesar, 19.8% Ni) in an amount to form a stoichiometry of Ni:Mo:P = 1:1:3. A precipitate formed, but could be made to dissolve by the addition of a few drops of nitric acid. Water was added to form enough solution to carry out an incipient wetness impregnation of a silica support (Cabosil, L90), The resulting solid was dried at 120 °C and calcined at 500 °C for 6 hours. It was reduced in a temperature programmed manner with a heating rate of 1 K min⁻¹ to 620 °C. The physical properties are listed in Table VII below and the x-ray diffraction pattern of the material is shown in Figure 7.

**Table VII. Physical characteristics of NiMaP₂/SiO₂ catalysts**

| Sample | Physical Characteristics | |
|---|---|---|
| | Surface Area m²g⁻¹ | CO Uptake µmol g⁻¹ |
| NiMoP₂ | - | - |
| NiMoP₂/SiO₂ | 153 | 55 |

### Example 8

### Hydrotreating activities of MoP/Al₂O₃ catalysts

Hydrotreating of a model petroleum liquid consisting of quinoline (Aldrich, 99%), benzofuran (Adrich, 99%), dibenzothiophene (Aldrich, 99%), tetralin (Aldrich, 99%), and tetradecane (Fisher, 99%), was carried out in a pressurized three-phase trickle bed reactor. Analysis was performed with a gas chromatograph (Hewlett Packard, 5890A) on liquid product collected at 2-3 hours intervals. An amount of catalyst corresponding to 70 µmol of CO sites was loaded to the reactor. To start the reaction catalyst were pretreated in hydrogen at 623 K and 1 atm for 2 hours. The conditions were set to 3.1Mpa (450 psig), a hydrogen flow rate at 150 cm³ min⁻¹ and a liquid feed rate of 5 cm³ min⁻¹. The results of the catalytic tests are listed in Table VIII below.

**Table VIII. Hydrotreating activities of MoP/Al₂O₃ catalysts**

| | | | |
|---|---|---|---|
| Sample † | Hydrotreating Performance | | |

| | HDN % | HYD % | HDS % |
|---|---|---|---|
| 6.8 wt% | 54 | 31 | 51 |
| 12.8 wt% | 52 | 33 | 57 |
| 12.8 wt%* | 62 | 29 | 57 |
| 22.7 wt% | 58 | 28 | 53 |
| 38.9 wt% | 54 | 33 | 44 |

| | | | |
|---|---|---|---|
| † Reduced to 1123 °C (β = 5 K min⁻¹, s.v. =1000 sccm g⁻¹) for 2 hours * Reduced to 1023 °C (β = 5 K min⁻¹, s.v. =1000 sccm g⁻¹) for 2 hours | | | |

### Example 9

### Hydrotreating activities of MoP/SiO₂, WP/SiO₂, Ni₂P/SiO₂, CoP/SiO₂, FeP/SiO₂, and NiMoP₂/SiO₂ catalysts

The catalysts MoP/SiO₂, WP/SiO₂, Ni2P/SiO₂, CoP/SiO₂, Fe₂P/SiO₂, and NiMoP₂/SiO₂ were tested as in example 8. The results are listed in Table IX. In both the difficult HDN reaction and the HDS reaction, the phosphides had substantially higher activity than a reference MoS₂/SiO₂ catalyst.

A concern with the use of any catalyst is its stability in the reaction medium. The phosphides were tested for 100 hours and did not display deactivation. Analysis of the products by XRD after reaction revealed that there was no change in bulk crystal structure (Figures 1-6). Furthermore, XPS revealed that only about 2 mol% of sulfur accumulated on the surface of the catalysts after reaction for 100 hours. These results demonstrate that the catalysts are completely stable in a sulfur environment.

**Table IX, Hydrotreating activities of phosphide catalysts**

| | | | |
|---|---|---|---|
| Sample | Hydrotreating Performance | | |

| | HDN % | HYD % | HDS % |
|---|---|---|---|
| MoP/SiO₂ | 31 | 45 | 20 |
| Wp/SiO₂ | 40 | 46 | 13 |
| Ni₂P/SiO₂ † | 14 | 38 | 90 |
| Ni₂P/SiO₂* | 80 | 19 | 98 |
| CoP/SiO₂ | 30 | 52 | 30 |
| Fe₂P/SiO₂ | 2 | 11 | 3 |
| NiMoP₂/SiO₂ | 34 | 45 | 25 |
| MoS₂/SiO₂ | 11 | 45 | 31 |

| | | | |
|---|---|---|---|
| † Ni:P = 1:1 * Ni:P = 1:2 | | | |

### Example 10

The catalysts were tested for HDN, HDS, and hydrogenation (HYD) activity in a trickle bed reactor operated at 643 K (370 °C) and 3.1 Mpa (450 psig). These are standard conditions typically used in an industrial hydroprocessing unit. The reactant feed consisted of quinoline (2000 ppm N), dibenzothiopene (3000 ppm S), tetralin (20 wt.%), and tetradecane (balance). An amount corresponding to 30 m² of catalyst was loaded in the reactor.

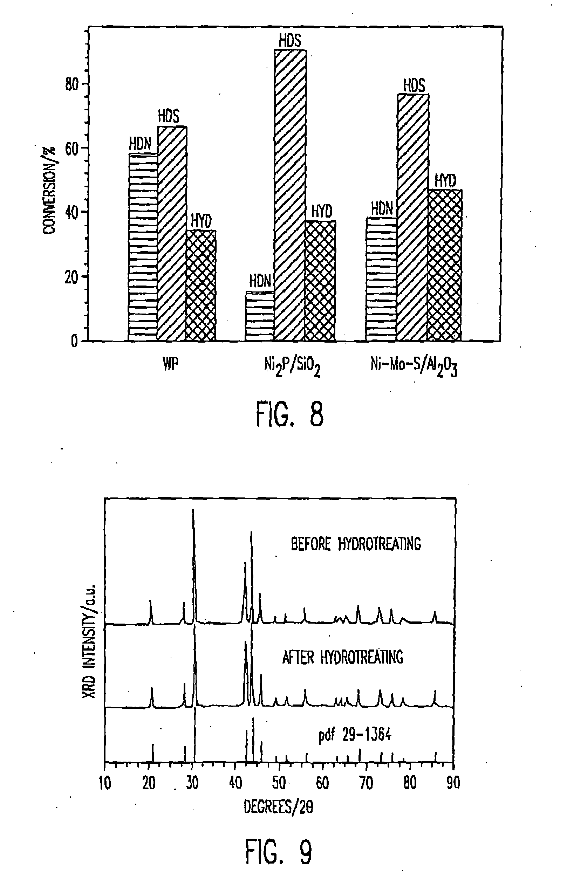

The results of the phosphide catalyst compared to NiMoS/Al₂O₃ are shown in Figure 8. In the difficult HDN reaction, tungsten phosphide had substantially higher activity than the commercial NiMo catalyst (58% vs 38%), while in HDS nickel phosphide had very high conversion (90% vs. 77%).

The overall activity of the phosphides was superior to or comparable to that of the sulfide. Also very attractive was the fact that the phosphides showed lower hydrogenation activity than the sulfide, indicating a more effective use of hydrogen, and no cracking.

The phosphides were tested for 100 hours and again did not display deactivation. Analysis of the products by XRD after reaction revealed that there was no change in bulk crystal structure (Figure 9). Furthermore, XPS revealed that only about 2 mol% of sulfur accumulated on the surface of the catalysts after reaction for 100 hours. These results again demonstrate that the catalysts are completely stable in a sulfur environment.

### Example 11

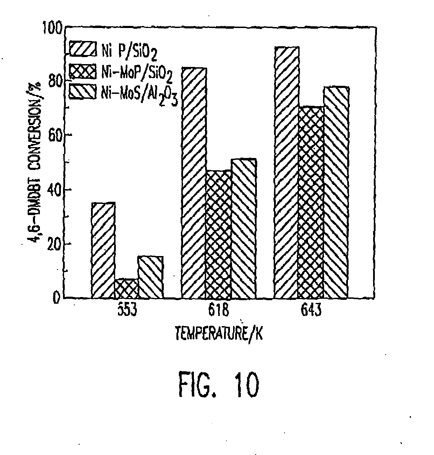

A pressing problem in hydrotreating is the removal of sulfur from refractory compounds like alkyl substituted dibenzothiophenes. This is the problem of deep HDS. In this example the conditions were the same as in Example 7 except that the feed contained 4,6-dimethyldibenzothiophene (500 ppm S), quinoline (200 ppm N), and the solvent was hexadecane. The phosphide catalysts tested were Ni₂/SiO₂ and NiMoP₂/SiO₂. Comparison was made to a highly optimized commercial Ni-Mo-S/AlaO₃ catalyst (Criterion 424) which was sulfided *in situ* at 400 °C in 10% H₂S/H₂ before use. The conversions obtained in HDS are shown in Figure 10. The comparison is on the basis of 70 µmol of active sites loaded in the reactor. The sites were titrated by CO chemisorption for the phosphides and low temperature O₂ chemisorption for the sulfide. As shown in Figure 10, the Ni₂P catalyst has higher activity than the commercial catalyst,

It will be readily understood by those persons skilled in the art that the present invention is susceptible to broad utility and application. Many embodiments and adaptations of the present invention other than those herein described, as well as many variations, modifications and equivalent arrangements, will be apparent from or reasonably suggested by the present invention and the foregoing description without departing from the substance or scope of the present invention.

Accordingly, while the present invention has been described in detail in relation to its preferred embodiment, it is to be understood that this disclosure is only illustrative and exemplary of the present invention and is made merely for purposes of providing a full and enabling disclosure of the invention. The foregoing disclosure is not intended to be construed to limit the present invention or otherwise exclude any other embodiments, adaptations, variations, modifications or equivalent arrangements, the present invention being limited only by the claims and the equivalents thereof.

## Claims

1. A catalyst comprising:
a metal phosphide complex having the formula MPₓ, wherein M is selected from the group consisting of V, Cr, Mn, Fe, Co, Ni, Nb, Mo, Ta, and W, and wherein x ranges from about 0.1 to about 10; and
a high surface area support, wherein the metal phosphide complex is dispersed on the high surface area support.

2. The catalyst of claim 1 wherein the high surface area support is selected from the group consisting of carbon, silica, alumina, titania, thoria, magnesia, zirconia, kaolin, bentonite, kieselguhr, zeolites, and combinations thereof.

3. The catalyst of claim 1 further comprising a promoter selected from the group consisting of the alkali metals, alkaline earth metals, platinum group metals, rhenium, copper, halides, boron, carbon, nitrogen, aluminum, sulfur, gallium germanium, arsenic, tin, antimony, bismuth, selenium and tellurium.

4. The catalyst of claim 1 wherein x ranges from about 0.5 to about 3.

5. The catalyst of claim 1 wherein the metal phosphide complex is deposited on the support in the range of about 1 to about 40% by weight complex to support.

6. The catalyst of claim 1 wherein the metal phosphide complex is deposited on the support in the range of about 10 to about 30% by weight complex to support.

7. A metal phosphide catalyst comprising:
a metal phosphide complex having the formula AₐB_{b}P_{y}, wherein A and B are each selected from the group consisting of V, Cr, Mn, Fe, Co, Ni, Nb, Mo, Ta, and W, wherein the sum of a and b is 1, the ratio of a to b ranges from about 0.01 to about 100, and y ranges from about 0,1 to about 10; and
a high surface area support, wherein the metal phosphide complex is dispersed on the high surface area support.

8. The metal phosphide catalyst of claim 7 wherein the high surface area support is selected from the group consisting of carbon, silica, alumina, titania, thoria, magnesia, zirconia, kaolin, bentonite, kieselguhr, zeolites, and combinations thereof.

9. The catalyst of claim 7 further comprising a promoter selected from the group consisting of the alkali metals, alkaline earth metals, platinum group metals, rhenium, copper, halides, boron, carbon, nitrogen, aluminum, sulfur, gallium germanium, arsenic, tin, antimony, bismuth, selenium and tellurium.

10. The catalyst of claim 7 wherein the ratio of a to b ranges from about 0.1 to about 10.

11. The catalyst of claim 7 wherein the ratio of a to b ranges from about 0.2 to about 5 and wherein y ranges from about 0.5 to about 3.

12. The catalyst of claim 7 wherein the metal phosphide complex is deposited on the support in the range of about 1 to about 40% by weight complex to support.

13. The catalyst of claim 7 wherein the metal phosphide complex is deposited on the support in the range of about 10 to about 30% by weight complex to support.

14. A method for hydrotreating a hydrocarbon feed comprising the step of:
exposing the hydrocarbon feed to a catalyst in an atmosphere containing hydrogen, wherein the catalyst comprises:
at least one metal selected from the group consisting of V, Cr, Mn, Fe, Co, Ni, Nb, Mo, Ta, and W, wherein at least a portion of said at least one metal is in the form of a phosphide; and
a high surface area support, wherein the metal phosphide complex is dispersed on the high surface area support.

15. The method of claim 14 wherein the phosphide has the formula MPₓ, wherein M is selected from the group consisting of V, Cr, Mn, Fe, Co, Ni, Nb, Mo, Ta, and W, and wherein x ranges from about 0.1 to about 10.

16. The method of claim 15 wherein x ranges from about 0.5 to about 3.

17. The method of claim 14 wherein the phosphide has the formula AₐB_{b}P_{y}, wherein A and B are each selected from the group consisting of V, Cr, Mn, Fe, Co, Ni, Nb, Mo, Ta, and W, wherein the sum of a and b is 1, the ratio of a to b ranges from about 0.01 to about 100, and y ranges from about 0.1 to about 10

18. The method of claim 17 wherein the ratio of a to b ranges from about 0.1 to about 10.

19. The method of claim 17 wherein the ratio of a to b ranges from about 0.2 to about 5 and wherein y ranges from about 0.5 to about 3.

20. The method of claim 14 wherein the step of exposing the hydrocarbon feed to a catalyst is sufficient to remove nitrogen from the hydrocarbon feed.

21. The method of claim 14 wherein the step of exposing the hydrocarbon feed to a catalyst is sufficient to remove oxygen from the hydrocarbon feed.

22. The method of claim 14 wherein the step of exposing the hydrocarbon feed to a catalyst is sufficient to hydrogenate an unsaturated organic compound in the hydrocarbon feed.

23. The method of claim 14 wherein the step of exposing the hydrocarbon feed to a catalyst is sufficient to hydroisomerize an organic compound in the hydrocarbon feed.

24. The method of claim 14 wherein the high surface area support is selected from the group consisting of carbon, silica, alumina, titania, thoria, magnesia, zirconia, kaolin, bentonite, kieselguhr, zeolites, and combinations thereof.

25. The method of claim 14 wherein the hydrocarbon feed is selected from the group consisting of middle distillates, kero, naptha, gas oil obtained by catalytic cracking, gas oil obtained by thermal cracking, straight-run gas oil, coker gas oil, vacuum gas oils, heavy gas oils, coal liquids, feeds extracted from tar sands, and feeds extracted from shale.

26. The method of claim 14 further comprising the step of processing the hydrocarbon feed in the presence of the catalyst at a temperature ranging from about 250 to about 450 °C, pressure ranging from about 5 to about 250 bar, space velocities ranging from about 0.1 to about 10 hr⁻¹, and H₂/feed ratios ranging from about 1000 to about 15000 scf/barrel.

27. The method of claim 14 wherein the metal phosphide complex is deposited on the support in the range of about 1 to about 40% by weight complex to support.

28. The catalyst of claim 14 wherein the metal phosphide complex is deposited on the support in the range of about 10 to about 30% by weight complex to support.

29. A metal catalyst comprising:
at least one metal selected from the group consisting of V, Cr, Mn, Fe, Co, Ni, Nb, Mo, Ta, and W, wherein at least a portion of said at least one metal is in the form of a phosphide; and
a high surface area support wherein the said at least on metal and said phosphide is dispersed on said high surface area support.

30. The catalyst of claim 29 wherein the high surface area support is selected from the group consisting of carbon, silica, alumina, titania, thoria, magnesia, zirconia, kaolin, bentonite, kieselguhr, zeolites, and combinations thereof.

31. The catalyst of claim 29 further comprising a promoter selected from the group consisting of the alkali metals, alkaline earth metals, platinum group metals, rhenium, copper, halides, boron, carbon, nitrogen, aluminum, sulfur, gallium germanium, arsenic, tin, antimony, bismuth, selenium and tellurium.

32. The catalyst of claim 29 wherein the metal phosphide complex is deposited on the support in the range of about 1 to about 40% by weight complex to support.

33. The catalyst of claim 29 wherein the metal phosphide complex is deposited on the support in the range of about 10 to about 30% by weight complex to support.

34. A process for hydrodesulfurizing a hydrocarbon feed containing sulfur compounds comprising the step of:
exposing the hydrocarbon feed to a catalyst, wherein the catalyst comprises:
at least one metal selected from the group consisting of V, Cr, Mn, Fe, Co, Ni, Nb, Mo, Ta, and W, wherein at least a portion of said at least one metal is in the form of a phosphide; and
a high surface area support, wherein the metal phosphide complex is dispersed on the high surface area support.

35. The method of claim 34 wherein the phosphide has the formula MPₓ, wherein M is selected from the group consisting of V, Cr, Mn, Fe, Co, Ni, Nb, Mo, Ta, and W, and wherein x ranges from about 0.1 to about 10.

36. The method of claim 35 wherein x ranges from about 0.5 to about 3.

37. The method of claim 34 wherein the phosphide has the formula AₐB_{b}P_{y}, wherein A and B are each selected from the group consisting of V, Cr, Mn, Fe, Co, Ni, Nb, Mo, Ta, and W, wherein the sum of a and b is 1, the ratio of a to b ranges from about 0.01 to about 100, and y ranges from about 0.1 to about 10

38. The method of claim 37 wherein the ratio of a to b ranges from about 0.1 to about 10.

39. The method of claim 37 wherein the ratio of a to b ranges from about 0.2 to about 5 and wherein y ranges from about 0.5 to about 3.
